(19) **Europäisches Patentamt**
**European Patent Office**
**Office européen des brevets**

(11) **EP 4 542 491 A1**

(12) **EUROPEAN PATENT APPLICATION**

(43) Date of publication:
**23.04.2025 Bulletin 2025/17**

(21) Application number: **23204253.1**

(22) Date of filing: **18.10.2023**

(51) International Patent Classification (IPC):
*G06T 7/55* $^{(2017.01)}$

(52) Cooperative Patent Classification (CPC):
**G06T 7/55;** G06T 2207/20044; G06T 2207/20084;
G06T 2207/30196

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Koninklijke Philips N.V.**
**5656 AG Eindhoven (NL)**

(72) Inventors:
• **LU, Yao**
**5656 AG Eindhoven (NL)**

• **VAREKAMP, Christiaan**
**5656 AG Eindhoven (NL)**
• **CHEN, Hongxin**
**5656 AG Eindhoven (NL)**
• **GU, Hai**
**5656 AG Eindhoven (NL)**
• **YANG, Ming**
**5656 AG Eindhoven (NL)**
• **MA, Fulong**
**5656 AG Eindhoven (NL)**

(74) Representative: **Philips Intellectual Property &
Standards**
**High Tech Campus 52**
**5656 AG Eindhoven (NL)**

(54) **APPARATUS AND METHOD FOR GENERATING A DEPTH MAP**

(57) An apparatus for generating a depth map for an image of a scene comprises a receiver (101) arranged to receive one or more images. A structural frame determiner (103) processes the first image to determine a two dimensional structural frame for an object in an image with the two dimensional structural frame being defined by a set of points and interconnections between the points. The two dimensional structural frame represents a projection to an image space/plane of the image of a three dimensional structural frame of the object in the scene. The structural frame(s) may for example represent a skeleton of a human or animal. A depth determiner (105) arranged to generate the depth map in dependence on the two dimensional structural frame. The structural frame determiner (103) may in many cases employ an artificial neural network to generate the two dimensional structural frame.

**FIG. 1**

EP 4 542 491 A1

**Description**

FIELD OF THE INVENTION

The invention relates to an apparatus and method for generating a depth map and in particular, but not exclusively, to generating a depth map for an image including a person or an animal.

BACKGROUND OF THE INVENTION

Traditionally, technical processing and use of images has been based on two-dimensional imaging but increasingly the third dimension is being explicitly considered in image processing.

For example, three dimensional (3D) displays have been developed which add a third dimension to the viewing experience by providing a viewer's two eyes with different views of the scene being watched.

An example is a free viewpoint use case which allows (within limits) the spatial navigation of a scene captured by multiple cameras. This can e.g. be either done on a smartphone or tablet and may provide a game-like experience. As an alternative, the data can be viewed on an Augmented Reality (AR) or Virtual Reality (VR) headset.

In many applications it may be desirable to generate view images for new viewing directions. Whereas various algorithms are known for generating such new view images based on an image and depth information, they tend to be highly dependent on the accuracy of the provided (or derived) depth information.

The quality of the presented three-dimensional image/ images from new views depends on the quality of the received image and depth data. In many practical applications and scenarios the provided depth information tends to be suboptimal. Indeed, in many practical applications and use scenarios, the depth information may not be as accurate as desired, and this may result in errors, artefacts and/or noise being introduced in the processing and to the generated images.

For example, in many applications, three dimensional scenes are captured using multi camera systems placed at different positions in the scene. Specific depth values may then be generated using multi view matching between cameras. However, depth estimation is problematic and tends to result in non-ideal depth values. This may again result in artefacts and a degraded three dimensional image quality of newly synthesized views.

In order to improve the depth information, a number of techniques for post-processing and/or improving depth estimation and/or depth maps have been proposed. However, these all tend to be suboptimal and tend to not be optimally accurate and reliable, and/or may be challenging to implement, e.g. due to the required computational resource.

An example of a post-processing of a depth map is disclosed in EP4013049A1. In that approach, a scanning approach is applied where a depth map may be initialized and subsequently iteratively updated using a scanning approach where the depth of a current pixel is updated based on a candidate set of candidate depth values which are typically the depth values for neighboring pixels. However, although such an approach may improve a depth map in many scenarios, it tends to not be optimal in all scenarios including not always generating optimally accurate depth maps. It also tends to be computationally demanding.

Hence, an improved approach for generating/ processing/ modifying depth information would be advantageous and in particular an approach for processing a depth map allowing increased flexibility, facilitated implementation, reduced complexity, reduced resource requirements, improved depth information, more reliable and/or accurate depth information, an improved 3D experience, improved quality of rendered images based on the depth information, and/or improved performance would be advantageous.

SUMMARY OF THE INVENTION

Accordingly, the Invention seeks to preferably mitigate, alleviate or eliminate one or more of the above mentioned disadvantages singly or in any combination.

According to an aspect of the invention there is provided an apparatus for generating a depth map for a first image of a scene, the apparatus comprises: a receiver arranged to receive at least the first image; a structural frame determiner arranged to process the first image to determine a two dimensional structural frame for an object in the first image, the two dimensional structural frame being defined by a set of points and interconnections between the points, the two dimensional structural frame representing a projection to an image space of the image of a three dimensional structural frame of the object in the scene; a depth determiner arranged to generate the depth map in dependence on the two dimensional structural frame.

The invention may improve depth maps leading to e.g. improved three-dimensional image processing and perceived rendering quality. In particular, the approach may in many embodiments and scenarios provide a more consistent and/or accurate depth map. The processing may in many embodiments provide an improved depth map while maintaining a sufficiently low complexity and/or resource demand.

An advantage in many embodiments is that the approach may be highly suitable for use with and integration in depth estimation techniques, such as in disparity based depth estimation using stereo- or multi-view images. The approach may in many embodiments allow refinement of depth values determined by other approaches.

The depth map may indicate depth values for pixels of the first image. A depth value may be any value indicative of a depth including e.g. a disparity value, a z-coordinate, or a distance from viewpoint value.

The two dimensional structural frame may be a projection of the three dimensional structural frame to the image space/plane of the first image, and in particular each point of the two dimensional structural frame may be a projection to the image plane of the first image of a (corresponding) point of the three dimensional structural frame.

The two/three dimensional structural frame may be skeleton (frame/model). The object may specifically be a human or an animal.

In some embodiments, the two-dimensional structural frame includes only two dimensional information and may only provide information of the structural frame within the image plane. For example, the two-dimensional structural frame may be defined only by positions of the points in the image, e.g. it may include image coordinates for each of the points of the two-dimensional structural frame.

In some embodiments, the two-dimensional model may further comprise information of a third coordinate. For example, for each point of the two-dimensional structural frame, there may also be provided a depth coordinate. For example, the two-dimensional structural frame points may each be defined by an image coordinate and further may include a depth value. Indeed, the two-dimensional structural frame may also provide information defining the three-dimensional structural frame and indeed the two dimensional structural frame can in many such cases be directly converted to the three-dimensional space and specifically to the three-dimensional structural frame.

In some embodiments, the apparatus may comprise an image synthesizer arranged to synthesize an image for a viewpoint (different from the viewpoint of the first image) based on/from the depth map and the first image.

In accordance with an optional feature of the invention, the structural frame determiner comprises a trained artificial neural network arranged to receive the first image as an input and to generate points of the two dimensional structural frame as an output.

This may provide improved performance and/or implementation in many embodiments. It may in particular in many scenarios provide an efficient approach for determining accurate 2D structural frames.

In some embodiments, the structural frame determiner is arranged to generate a probability map for at least some points, the probability map for a point indicating a probability of the point at different positions in the image space; and wherein the depth map generator is arranged to generate the depth map in dependence on the probability maps.

In accordance with an optional feature of the invention, the receiver is arranged to receive a plurality of images, the structural frame determiner is arranged to generate a two dimensional structural frame for at least some images of the plurality of images, and the depth determiner is arranged to determine depth values for the depth map in dependence on a disparity between points of two-dimensional frame structures for the at least some images.

This may provide improved performance and/or implementation in many embodiments.

In accordance with an optional feature of the invention, the depth determiner is arranged to determine an estimated three dimensional frame structure for the object in dependence on disparities between points of the two-dimensional frame structures for the at least some images, and to determine depth values for points of the two dimensional structural frames for the at least some of the images by a projection of points of the estimated three dimensional frame structure to image spaces of the at least some images.

This may provide improved performance and/or implementation in many embodiments.

In accordance with an optional feature of the invention, the depth determiner is arranged to generate depth values for an interconnection between a first and a second point of the two-dimensional frame structure from depth values of the first point and the second point.

This may provide improved performance and/or implementation in many embodiments.

In some embodiments, the depth map determiner is arranged to determine the depth values for the interconnection between the first and a second point by interpolation between depth values of the first point and the second point.

In some embodiments, the depth determiner is arranged to determine three dimensional position estimates for interconnections between points of the estimated three dimensional frame structure from estimated positions of points of the estimated three dimensional frame structure, and to determine depth values by a projection of the interconnections to the image space of the first image.

In accordance with an optional feature of the invention, the depth determiner is arranged to determine an initial depth map, and to generate the depth map by for at least a first pixel of the depth map performing the steps of: determining a set of candidate depth values, the set of candidate depth values comprising depth values for other pixels of the depth map than the first pixel and at least a first candidate depth value determined from the 2D structural frame; determining a cost value for each of the candidate depth values in the set of candidate depth values in response to a cost function; selecting a first depth value from the set of candidate depth values in response to the cost values for the set of candidate depth values; determining an updated depth value for the first pixel in response to the first depth value; wherein the cost value for the first candidate depth value is dependent on a difference between the candidate depth value and a depth value of the 2D structural frame.

This may provide improved performance and/or implementation in many embodiments. A cost function may be implemented as a merit function and a cost value may be indicated by a merit value. A selection of the first depth value in response to cost values may be implemented as a selection of the first depth value in response to merit values determined from a merit function. An increasing merit value/ function is a decreasing cost value/ function. A selection of the first depth value may be a selection of the candidate depth value of the set of candidate depth values which has the lowest cost value, corresponding/ equivalent to selection of the first depth value being a selection of the candidate depth value of the set of candidate depth values which has the highest merit value.

In accordance with an optional feature of the invention, the cost value for the first candidate depth value is dependent on a distance between a position of the candidate depth value and a position of the depth value of the 2D structural frame.

This may provide improved performance and/or implementation in many embodiments.

In accordance with an optional feature of the invention, the depth determiner is arranged to extract visual features from the first image and to determine an image mask for the object in the first image, and wherein the depth determiner is further arranged to determine depth estimates for the depth map in dependence on the visual features, the mask, and the two dimensional structural frame.

This may provide improved performance and/or implementation in many embodiments.

In accordance with an optional feature of the invention, the depth determiner comprises a trained artificial neural network arranged to receive the visual features, the mask, and the two dimensional structural frame as inputs and to determine the depth map as an output.

This may provide improved performance and/or implementation in many embodiments.

In accordance with an optional feature of the invention, the depth determiner comprises a trained artificial neural network arranged to receive the first image as an input and to generate the mask as an output.

This may provide improved performance and/or implementation in many embodiments.

In accordance with an optional feature of the invention, the depth determiner is arranged to receive a first set of depth values for the image and to determine the depth map by adapting the first set of depth values in dependence on the two dimensional frame structure.

This may provide improved performance and/or implementation in many embodiments.

In accordance with an optional feature of the invention, the at least first image comprises a plurality of images representing the scene from different viewpoints, and the apparatus comprises a disparity estimator arranged to determine the first set of depth values by disparity estimation between the plurality of images.

This may provide improved performance and/or implementation in many embodiments.

In accordance with an optional feature of the invention, the depth determiner is arranged to determine a depth value for a first pixel of the depth map by reducing a difference between a depth value of the first set of depth values for the first depth pixel and a depth value of the two dimensional frame structure, the reduction being dependent on a distance between the first depth pixel and the two dimensional depth structure.

This may provide improved performance and/or implementation in many embodiments.

According to another aspect of the invention there is provided a method of determining a depth map for a first image of a scene, the method comprises: receiving at least the first image; processing the first image to determine a two dimensional structural frame for an object in the first image, the two dimensional structural frame being defined by a set of points and interconnections between the points, the two dimensional structural frame representing a projection to an image space of the image of a three dimensional structural frame of the object in the scene; and generating the depth map in dependence on the two dimensional structural frame.

These and other aspects, features and advantages of the invention will be apparent from and elucidated with reference to the embodiment(s) described hereinafter.

BRIEF DESCRIPTION OF THE DRAWINGS

Embodiments of the invention will be described, by way of example only, with reference to the drawings, in which

FIG. 1 illustrates an example of an apparatus for generating a depth map in accordance with some embodiments of the invention;
FIG. 2 illustrates an example of a structure of an artificial neural network;
FIG. 3 illustrates an example of a node of an artificial neural network;
FIG. 4 illustrates an example of an approach for determining depth maps for images in accordance with some embodiments of the invention;
FIG. 5 illustrates an example of an approach for determining depth maps for images in accordance with some embodiments of the invention;

FIG. 6 illustrates an example of an approach for determining depth maps for images in accordance with some embodiments of the invention; and

FIG. 7 illustrates some elements of a possible arrangement of a processor for implementing elements of an apparatus in accordance with some embodiments of the invention.

## DETAILED DESCRIPTION OF THE EMBODIMENTS

Images representing a scene are today sometimes supplemented by a depth map that provides information of the depth for pixels in the image. Such additional information may allow e.g., novel view synthesis or depth dependent editing operations thereby providing a number of additional services. The depth map tends to provide a depth value for each of a plurality of pixels, which are typically arranged in an array with a first number of horizontal rows and a second number of vertical columns. The depth values provide depth information for the pixels of the associated image. In many embodiments, the resolution of the depth map may be the same as the resolution of the image, and thus each pixel of the image may have a one-to-one link to one depth value of the depth map. However, in many embodiments, the resolution of the depth map may be lower than that of the image, and in some embodiments a depth value of the depth map may be common for a plurality of pixels of the image (and specifically the depth map pixels may be larger than the image pixels).

The depth values may be any value indicative of a depth, including specifically a depth coordinate value (e.g. directly providing a z-value for the pixel) or a disparity value. In many embodiments, the depth map may be a rectangular array (with rows and columns) of pixels with each pixel providing a depth (/disparity) value.

The accuracy of the representation of the depth of a scene is a key parameter in the resulting quality of novel view images being synthesized and perceived by a user. The generation of accurate depth information is accordingly important. For artificial scenes (e.g. a computer game), it may be relatively easy to achieve accurate values but for applications involving e.g. the capture of real world scenes, this may be very difficult.

A number of different approaches for estimating depth have been proposed. One approach is to estimate disparity between different images capturing the scene from different viewpoints using pattern matching. However, such a disparity estimation is inherently imperfect. A further approach adds depth sensors e.g. using time-of-flight or structured light. However, these depth sensor often also contain noise and have a limited measurement range and spatial resolution.. A third approach is to exploit predetermined (assumed) information of depth in the scene. For example, for outdoor scenes (and indeed for most typical indoor scenes), objects lower in the image tend to be closer than objects higher in the image (e.g. the floor or ground has increasing distance to the camera for increasing height, the sky tends to be further back than the lower ground etc.). Accordingly, predetermined depth profiles may be used and fitted to the data to estimate suitable depth map values.

However, most depth estimation techniques tend to result in less than perfect depth estimation and improved and typically more reliable and/or accurate depth values would be advantageous for many applications.

In the following an approach for generating a depth map will be described. The approach may in many scenarios generate an improved depth map and provide more accurate depth information.

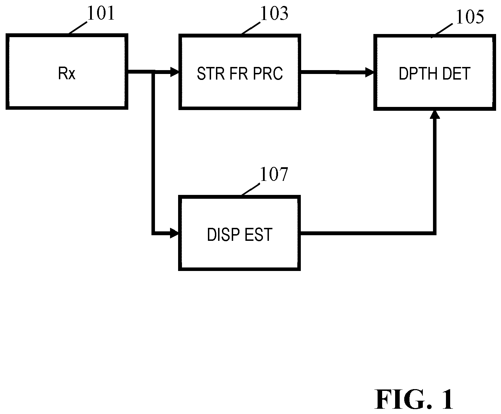

FIG. 1 illustrates some elements of an apparatus for generating a depth map for an image. The apparatus comprises a receiver 101 which is arranged to receive at least one (2D) image of a (3D) scene, and typically a plurality of images of the scene is received. Each image represents the scene from a given viewpoint, often in the field referred to as the capture point, and when a plurality of images are received they are typically provided for different capture points, i.e. each image captures the image from a different viewpoint.

The receiver 101 is coupled to a first circuit, which henceforth also will be referred to as a structural frame determiner 103 which is arranged to process an image to determine a two dimensional structural frame (a 2D structural frame) for an object in the image. The 2D structural frame represents a three dimensional structural frame (3D structural frame) of the object in the scene, and specifically the 2D structural frame is the 3D structural frame projected on to the image space/plane of the image.

The 3D structural frame may be an inner frame, structure, skeleton, framework that structurally supports the object. Indeed, in many embodiments, the 3D structural frame may be a skeleton for the object, and indeed the object may in many embodiments be a human or animal and the 3D structural frame may be the skeleton of the human or animal. For other objects, such as e.g. a car, the 3D structural frame may be a chassis or other supporting framework or basic structure.

In many embodiments, the 3D structural frame may be represented by a set of points that are connected by interconnections. The interconnections may specifically have a predetermined shape, and typically are line segments. Thus, the 3D structural frame may be given by a set of points connected by line segments. Each point is a point in the 3D space of the scene and thus each point can be represented by set of coordinates, and specifically scene coordinates.

The projection of the 3D structural frame on the 2D image space/plane may accordingly also be represented by a set of points that are connected by interconnections, which specifically may be linear. Thus, the 2D structural frame may be given as a set of points with (typically linear) connections. Each of the points of the 2D structural frame may be represented by a set of coordinates, and specifically image coordinates. The points of the 3D structural frame may typically be represented by three coordinate values and the points of the 2D structural frame may be represented by two coordinate values.

The 2D structural frame specifically represents the projection of the 3D structural frame onto the image space/plane of the image. In particular, each point of the 2D structural frame is a projection of a point of the 3D structural frame onto the image space/plane of the received image. The 2D structural frame may be considered to represent the 3D structural frame as it would project to the viewport of the image, and thus it may represent how the 3D structural frame would be seen from the viewpoint of the image. The 2D structural frame accordingly represents the 3D structural frame as it would be seen in the image. The 2D structural frame thus provides information on the representation of the object in the image, and specifically on the representation of the structural frame of the object.

The structural frame determiner 103 is arranged to determine the 2D structural frame for the object from the received image. In some embodiments, the structural frame determiner 103 may be arranged to first determine the 3D structural frame and then project that on to the image plane of the image, or may in some embodiments be arranged to directly determine the 2D structural frame.

The determination of the 2D structural frame may be based on predetermined structural frame data indicative of properties of the structural frame of the object. The data may specifically be constraining data such as an indication of relative properties between points, such as a maximum, minimum distance and/or angle between pairs of points. Such structural frame property data may reflect limiting properties of the object. For example, for a structural frame being a human skeleton, the data may for example indicate a maximum or minimum distance between two interconnected points, such as e.g. a maximum and/or minimum distance between points corresponding to the wrists and elbow points, reflect how points may move relative to each other (e.g. for the 3D structural frame, the distance between the wrist and elbow point will be fixed and this will also provide restrictions on the 2D structural frame (in particular in combination with information of the constraints of movements of points relative to each other)), etc. In some cases, the structural frame determiner 103 may include a predetermined model of the structural frame of the object with a number of variable parameters that can be varied to adapt the model to match a specific instantiation of the structural frame.

In some embodiments, the structural frame determiner 103 may be arranged to determine the 2D structural frame by detecting specific image objects or regions/points in the image which are likely to correspond to different parts of the object. For example, if the object is specifically a football player, the structural frame determiner 103 may be arranged to detect a face, hands, torso and arms, boots, knees, etc. The detecting may typically be based on distinctive colors (skin tone, distinctive color of football jersey, color of boots etc) as well as the relative distance and position between these (e.g. the knee being below football shorts and above boots etc). The position of each of these items may correspond to a point of the structural frame and the parameters of the structural frame model may then be adapted to provide the best fit to the detected points/image regions.

In some embodiments, the 2D structural frame may only be defined in the image plane and may only include 2D information, i.e. it may only include information of how the structural frame is structured in the image plane (and thus specifically may only include 2D information such as only 2D image coordinates being provided for the points of the structural frame).

However, in other embodiments, the 2D structural frame may also include some information that relates to the three dimensional scene and positions. For example, the image plane information provided by image coordinates for points and/or interconnections may be combined with depth data that e.g. indicates a z-direction distance. Thus, the 2D information may be supplemented by 3D data and the 2D structural frame may in such a case not only provide information of the projection of the 3D frame on the image plane, but may also provide information on conversion from this image plane to 3D coordinates. Thus, in such cases the 2D structural frame may also provide information that directly allows the 3D structural frame to be determined, and indeed it can be considered that the 2D structural frame also directly represents/-correspond to the 3D structural frame.

In many embodiments, the structural frame determiner 103 comprises a trained artificial neural network which is arranged to receive the image as an input and to generate the two dimensional structural frame as an output.

For example, an artificial neural network may be arranged to directly provide an output corresponding to the 2D structural frame in response to a single image input. Indeed, a number of algorithms are known which based on a single image may provide not only the image coordinates of points of the 2D structural frame but which may in addition provide depth. Such algorithms may for example directly provide a 2D structural frame/3D structural frame represented by image coordinates and depth for all points of the structural frame, such as all points of a human skeleton structure.

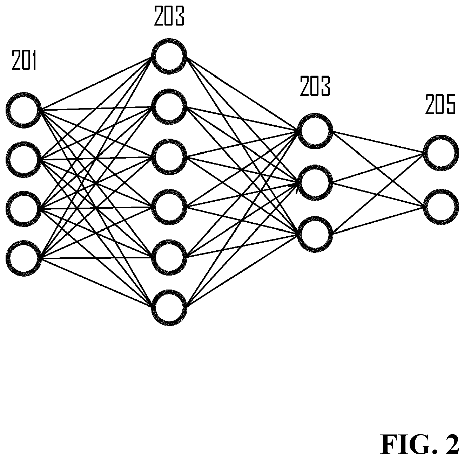

A suitable artificial neural network may be a network of nodes arranged in layers and with each node holding a node value. FIG. 2 illustrates an example of a section of an artificial neural network.

The node value for a given node may be calculated to include contributions from some or often all nodes of a previous layer of the artificial neural network. Specifically, the node value for a node may be calculated as a weighted summation of the node values of all the nodes output of the previous layer. Typically, a bias may be added and the result may be subjected to an activation function. The activation function provides an essential part of each neuron by typically providing a non-linearity. Such non-linearities and activation functions provides a significant effect in the learning and adaptation process of the neural network. Thus, the node value is generated as a function of the node values of the previous layer.

The artificial neural network may specifically comprise an input layer 201 comprising a plurality of nodes receiving the input data values for the artificial neural network. Thus, the node values for nodes of the input layer may typically directly be the input data values to the artificial neural network and thus may not be calculated from other node values.

The artificial neural network may further comprise none, one, or more hidden layers 203 or processing layers. For each of such layers, the node values are typically generated as a function of the node values of the nodes of the previous layer, and specifically a weighted combination and added bias followed by an activation function (such as a sigmoid, ReLU, or Tanh function may be applied).

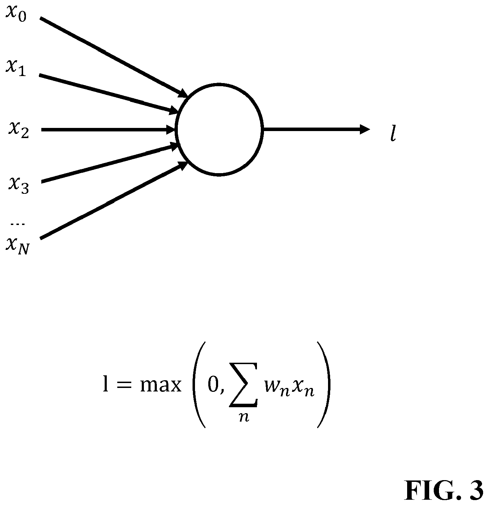

Specifically, as shown in FIG. 3, each node, which may also be referred to as a neuron, may receive input values (from nodes of a previous layer) and therefrom calculate a node value as a function of these values. Often, this includes first generating a value as a linear combination of the input values with each of these weighted by a weight:

$$k = \sum_n w_n x_n$$

where w refers to weights, x refers to the nodes of the previous layer and n is an index referring to the different nodes of the previous layer.

An activation function may then by applied to the resulting combination. For example, the node value 1 may be determined as:

$$l = f(k)$$

where the function may for example be a Rectified Linear Unit function as described in Xavier Glorot, Antoine Bordes, Yoshua Bengio Proceedings of the Fourteenth International Conference on Artificial Intelligence and Statistics, PMLR 15:315-323, 2011):

$$f(k) = ReLU(k) = \max(0, k)$$

Other often used functions include a sigmoid function or a tanh function. In many embodiments, the node output or value may be calculated using a plurality of functions. For example, both a ReLU and Sigmoid function may be combined using an activation function such as:

$$f(k) = ReLU(k) + \sigma(k)$$

Such operations may be performed by each node of the artificial neural network (except for typically the input nodes).

The artificial neural network further comprises an output layer 205 which provides the output from the artificial neural network, i.e. the output data of the artificial neural network is the node values of the output layer. As for the hidden/ processing layers, the output node values are generated by a function of the node values of the previous layer. However, in contrast to the hidden/ processing layers where the node values are typically not accessible or used further, the node values of the output layer are accessible and provide the result of the operation of the artificial neural network.

A number of different networks structures and toolboxes for artificial neural network have been developed and in many embodiments the artificial neural network may be based on adapting and customizing such a network. An example of a network architecture that may be suitable for the applications mentioned above is WaveNet by van den Oord et al which is described in Oord, Aaron van den, Sander Dieleman, Heiga Zen, Karen Simonyan, Oriol Vinyals, Alex Graves, Nal Kalchbrenner, Andrew Senior, and Koray Kavukcuoglu. "Wavenet: A generative model for raw audio." arXiv preprint arXiv: 1609.03499 (2016).

WaveNet is an architecture used for the synthesis of time domain signals using dilated causal convolution, and has been successfully applied to audio signals. For WaveNet the following activation function is commonly used:

$$\mathbf{z} = \tanh\left(W_{f,k} * \mathbf{x}\right) \odot \sigma\left(W_{g,k} * \mathbf{x}\right),$$

where * denotes a convolution operator, 0 denotes an element-wise multiplication operator, $\sigma(\cdot)$ is a sigmoid function, k is the layer index, f and g denote filter and gate, respectively, and W represents the weights of the learned artificial neural network. The filter product of the equation may typically provide a filtering effect with the gating product providing a weighting of the result which may in many cases effectively allow the contribution of the node to be reduced to substantially zero (i.e. it may allow or "cutoff" the node providing a contribution to other nodes thereby providing a "gate" function). In different circumstances, the gate function may result in the output of that node being negligible, whereas in other cases it would contribute substantially to the output. Such a function may substantially assist in allowing the neural network to effectively learn and be trained.

A number of different networks structures and toolboxes for artificial neural network have been developed and in many embodiments the artificial neural network may be based on adapting and customizing such a network. An example of a network architecture that may be suitable for the applications mentioned above are Long short-term memory (LSTM)[ by Sepp Hochsreiter which is described in Hochreiter, Sepp, and Jürgen Schmidhuber. "Long short-term memory." Neural computation 9.8 (1997): 1735-1780.

LSTM are an architecture used for classification and regression of time domain signals using recurrent causal or bidirectional evaluation, and has been successfully applied to audio signals. For

$$f_t = \sigma_g(W_f * x_t + U_f * h_{t-1} + V_f \circ c_{t-1} + b_f)$$

where * denotes matrix multiplication, o denotes an Hadamard product, x is the input vector, $h_{t-1}$ denotes the output vector of the previous time step, W, V, U are the network wights, while b is a bias vector.

In theory, classic (or "vanilla") artificial neural networks can keep track of arbitrary long-term dependencies in the input sequences. The problem with vanilla artificial neural networks is computational (or practical) in nature: when training a vanilla artificial neural network using back-propagation, the long-term gradients which are back-propagated can "vanish" (that is, they can tend to zero) or "explode" (that is, they can tend to infinity), because of the computations involved in the process, which use finite-precision numbers. artificial neural networks using LSTM units partially solve the vanishing gradient problem, because LSTM units allow gradients to also flow unchanged. However, LSTM networks can still suffer from the exploding gradient problem.

An artificial neural network may in some cases further be arranged to include additional contributions that allow the artificial neural network to be dynamically adapted or customized for a specific desired property or characteristics of the generated output. For example, a set of values may be provided to adapt the artificial neural network. These values may be included by providing a contribution to some nodes of the artificial neural network. These nodes may be specifically input nodes but may typically be nodes of a hidden or processing layer. Such adaptation values may for example be weighted and added as a contribution to the weighted summation/ correlation value for a given node.

The above description relates to a neural network approach that may be suitable for many embodiments and implementations. However, it will be appreciated that many other types and structures of neural network may be used. Indeed, many different approaches for generating a neural network have been, and are being, developed including neural networks using complex structures and processes that differ from the ones described above. The approach is not limited to any specific neural network approach and any suitable approach may be used without detracting from the invention.

Artificial neural networks are adapted to specific purposes by a training process which is used to adapt/ tune/ modify the weights and other parameters (e.g. bias) of the artificial neural network. It will be appreciated that many different training processes and algorithms are known for training artificial neural networks. Typically, training is based on large training sets where a large number of examples of input data are provided to the network. Further, the output of the artificial neural network is typically (directly or indirectly) compared to an expected or ideal result. A cost function may be generated to reflect the desired outcome of the training process. In a typical scenario known as supervised learning, the cost function often represents the distance between the prediction and the ground truth for a particular input data. Based on the cost function, the weights may be changed and by reiterating the process for the modified weights, the artificial neural network may be adapted towards a state for which the cost function is minimized.

In more detail, during a training step the neural network may have two different flows of information from input to output (forward pass) and from output to input (backward pass). In the forward pass, the data is processed by the neural network as described above while in the backward pass the weights are updated to minimize the cost function. Typically, such a backward propagation follows the gradient direction of the cost function landscape. In other words, by comparing the predicted output with the ground truth for a batch of data input, one can estimate the direction in which the cost function is minimized and propagate backward, by updating the weights accordingly. Other approaches known for training artificial neural networks include for example Levenberg-Marquardt algorithm, the conjugate gradient method, and the Newton method etc.

In the present case, training may specifically include a training set comprising a potentially large number of images of a scene and data representing the 2D structural frame for a suitable object, e.g. a person, in the image. The 2D structural frame may for example me determined manually for the training images and these manually constructed 2D structural frames may then be used as references for the evaluation of the 2D structural frames generated by the artificial neural network. In many embodiments, the training images may be synthetically generated, and may be generated to include a suitable object. The synthesis of the image of a scene may be based on a 2D structural frame of an object in the scene. For example, an image of a landscape may include a person that has been synthesized based on a model of the skeleton of a person. Thus, artificial neural network may be trained by analyzing these synthesized images and comparing the resulting 2D structural frame to that used to synthesize the image. A large number of such images and training data may be generated and used to train the network.

A specific example of an artificial neural network suitable for use in the described approach may be be found in He, K., Gkioxari, G., Dollár, P., and Girshick, R., "Mask R-CNN", <i>arXiv e-prints</i>, 2017. doi:10.48550/arXiv. 1703.06870. The article describes a training approach and an artificial neural network that is quite broad in applicability and which may be used for multiple tasks: object detection (bounding boxes), object instance segmentation (object masks) and key-point detection.

The structural frame determiner 103 is accordingly arranged to generate a structural frame defined by key points. The structural frame further includes interconnections between some (typically) pairs of points. The interconnections may constrain how the points may be positioned, and specifically how the points may move/change position relative to each other. In some embodiments, a predetermined structural frame model may be provided with e.g. a number of points and a number of interconnections between some of the (sets of) points. The predetermined model may have a number of variable parameters. For example, the positions of the points may be variable but constrained by the interconnects. The constraint provided by each interconnect may for example be a set of acceptable value for a distance and/or orientation between points connected by the interconnect. The structural frame for the image may then be determined by fitting the predetermined model to the image, e.g. by varying the parameters to result in the best fit. In many embodiments, an artificial neural network may be trained to perform such fitting implicitly by being trained to receive an image and to provide an output of positions of points of a given structural frame. For example, for embodiments where the structural frame is a human skeleton, the artificial neural network may be trained to provide positions of a predetermined set of points corresponding to selected points of the skeleton, such as the skull, the shoulder joints, the hip joints, the elbows, etc.

A structural frame can also be created based on the depth map from a depth sensor (e.g. using time-of-flight). For example, for a chair, the structural frame can be created in 3D space from the depth map.

The above described approaches may in some embodiments be performed in the three dimensional space with the 3D structural frame then being projected on to the 2D structural frame. However, in many embodiments, the approach may be directly applied to/performed in the two-dimensional image plane, and thus the approach may directly provide the 2D structural frame. The neural networks for key point detection for a certain object category (e.g. humans) directly from an input color image typically use this latter approach.

In some embodiments, the structural frame determiner 103 may provide a confidence, e.g., with a value between 0 and 1 for each of the points. These confidence values can provide valuable info on how much we can rely on a given point or connected line segment in the generation of candidate depth values for the dense (per pixel) depth map estimation step that follows.

In the following various approaches for generating a depth map will be described.

In some embodiments, the receiver 101 is arranged to receive a plurality of images that capture the scene from different viewpoints, and the structural frame determiner 103 is arranged to generate a two-dimensional structural frame for some images and typically for all of the images. Thus, 2D structural frames are generated for each of a plurality of images of the scene. The depth determiner 105 may in such embodiments be arranged to determine depths for the depth map in dependence on a disparity between corresponding points of two-dimensional frame structures for the at least some images.

The depth determiner 105 may for example use the disparity vector to determine a depth of the corresponding point in different images representing different view points. Thus, for two images that view the scene from different view points, the relative position in the two images of a given corresponding point of the 2D structural frame (e.g. a point corresponding to a shoulder of a person) is used. The 3D position of that point in world space can be determined from the difference in the image positions in the two images.

In some embodiments, only two images (and two 2D structural frames) are considered, and the depth value of the depth map for one of the images may, for the pixel corresponding to the point of the 2D structural frame in that image, be set to the determined depth value. In some cases, a plurality of pairs of images may be considered and a depth value may e.g., be determined for each pair of images/2D structural frame, and the resulting depth value may be determined from these, e.g., by averaging.

The approach may accordingly determine depth values for the points of the 2D structural frame. In many embodiments, the depth determiner 105 may be arranged to determine an estimated three dimensional frame structure for the object based on the disparities between points of the two-dimensional frame structures for the at least some images. In some embodiments, the 3D structural frame may be generated by geometric calculation based on one image, the view-point of that image, and the position of the point in the image, and the determined depth. This may be repeated for all points in the 2D structural frame thereby generating the 3D points of the 3D structural frame. The interconnections of the 3D structural frame may then be determined as the interconnections between the same points as for the 2D structural frame.

In other embodiments, more complex approaches may be used to determine the estimated 3D structural frame. For example, multiple determinations of 3D points may be made based on different image pairs and these may be combined, e.g., by averaging, or fitting of a predetermined 3D structural frame model may be applied, etc.

In many embodiments, the 2D structural frame for one or more images may be generated by projecting the 3D structural frame on to the image plane of the image. In many embodiments and scenarios, this may provide improved 2D structural frames to be determined which may further lead to improved depth determination and an improved depth map to be generated.

In many embodiments, the depth determiner 105 may be arranged to generate depth values for the interconnections between points. Specifically, depth values for an interconnection between a first and a second point of the two-dimensional frame structure may be determined from depth values of the first point and the second point.

In some embodiments, this may be done directly in the image plane of the 2D structural frame. Specifically, the depth values along an interconnection from two points may be done by interpolating between the two depth values of the two points. For example, for a linear interconnection, the interpolation may simply be a weighted linear combination of the depth of the two points with the weights depending on the distance to each of the points.

In some embodiments, the depth values for the interconnect may be based on a consideration in the 3D domain. For example, the depth determiner 105 may determine the 3D positions of two points and then determine positions of different parts of the interconnection between these two points in the 3D space. Again, in some embodiments, an interpolation, such as a linear interpolation, may be performed, but in the 3D space. Thus, 3D positions may be determined along an interconnection between two 3D points of the 3D structural frame by interpolating between the points of the two 3D points. The resulting position may then be projected to the 2D plane to generate a set of depth values for the corresponding interconnection in the 2D structural frame.

In some embodiments, the depth determiner 105 may effectively be arranged to construct a connecting line in 3D space, map out the values by interpolating points on the line, and projecting those points to the image space. In some embodiments, the depth determiner 105 may be arranged to directly project/or generate points in the 2D image space and to interpolate depth values on the projected/corresponding line.

In some embodiments, the depth determiner 105 may be arranged to first determine an initial depth map and then proceed to update this depth map considering the 2D structural frame.

The initial depth map may be determined in any suitable form, including for example by disparity estimation from multi-angle images, dedicated range/distance measurements, etc. Thus, the initial depth map may be determined without any consideration of the 3D structural frame or the 2D structural frame.

The depth determiner 105 may then determine the output depth map by updating depth values in the initial depth map in dependence on the 2D structural frame/ 3D structural frame. The depth determiner 105 may specifically do this by for a given depth pixel/depth value proceeding to determine a set of candidate depth values that consists or comprises depth values for other pixels of the depth map than the first pixel as well as one or more depth values determined from the 2D structural frame, and typically being a depth value of the 2D structural frame.

The depth determiner 105 may determine a cost value for each of the candidate depth values using a suitable a cost function. It may then proceed to select one of the depth values based on the generated cost values. It may then determine an updated depth value based on the selected depth value, e.g., simply by setting the depth value of the depth map to the selected depth value. The cost value for a depth value determined from the 2D structural frame, such as a depth value of the 2D structural frame, is determined in dependence on a difference between the candidate depth value and the depth value of the 2D structural frame, and typically the depth value of the 2D structural frame that is closest to the pixel for which the depth value is being determined. Typically, it will also be dependent on the distance between the 2D structural frame and the candidate pixel value.

In more detail, the depth determiner 105 may proceed to determine a set of candidate depth values for a given pixel. The set of candidate depth values comprises depth values for a set of candidate pixels. The candidate set of depth values for a given pixel can consist of depth values of neighbor pixels, spatially or in time.. For example, the candidate set may include depth values for pixels in a neighborhood around the current pixel, such as e.g., a set of pixels within a given distance of the current pixel or within a window/ kernel around the current pixel.

In many embodiments, the candidate set of pixels also includes the depth value of the current pixel itself, i.e., the first depth value is itself one of the candidate depth values of the set.

Further, in many embodiments, the set of candidate depth values may also include depth values from other depth maps. For example, in many embodiments where the image is part of a video stream, one or more depth values from prior and/or subsequent frames/ images may also be included in the set of candidate depth values, or depth values from other views for which the depth map is simultaneously estimated may be included.

In some embodiments, the set of candidate depth values may further include values that are not directly the depth values of a depth map. For example, in some embodiments, the set of candidate depth values may include one or more fixed depth values or e.g., relative offset depth values, such as a depth values larger or smaller than the current initial depth value by a fixed offset. Another example is that the set of candidate depth values may include one or more random or semi-random depth values.

The depth determiner 105 may then determine cost values for the set of candidate depth values, and specifically a cost value may be determined for each candidate depth value of the set of candidate depth values.

The cost value may be determined based on a cost function which may be dependent on a number of different parameters as will be described in more detail later. In many embodiments, the cost function for candidate depth values for pixels of the current depth map depend on a difference between the image values of multi-view images which are offset by a disparity corresponding to the depth value. Thus, for a first depth value, or possibly each candidate depth value of the set of candidate depth values that belong to the set of candidate depth values, the cost function may be monotonically decreasing as a function of a difference between two view images of a multi-view image in image areas having a disparity between the two image views matching the candidate depth value. The image areas may specifically be image areas that include the current pixel and/or the pixel of the candidate depth value. The image area may typically be relatively small such as e.g. comprising no more than say 1%, 2%, 5%, or 10% of the image and/or e.g. not comprising more than 100, 1000, 2000, 5000, or 10000 pixels.

In some embodiments, the depth determiner 105 may for a given candidate depth value determine the disparity between two images which matches the depth value. It may then apply this disparity to identify an area in one of the two images that is offset to an area in the other image by that disparity. A difference measure may be determined between image signal values, e.g. RGB values, in the two areas. Thus, a difference measure may be determined for the two images/ image areas based on the assumption that the candidate depth value is correct. The lower the difference, the more likely it is that the candidate depth value is an accurate reflection of the depth. Thus, the lower the difference measure the lower the cost function.

The image area may typically be a small area around the first/ current pixel, and indeed in some embodiments may only comprise the first/current pixel.

For candidate depth values corresponding to the current depth map, the cost function may accordingly comprise a cost contribution which is dependent on a match between two multi-view images for a disparity corresponding to the candidate depth value.

In many embodiments, the cost value for candidate depth values for other depth maps associated with an image, such as temporally offset depth maps and images, may also include a corresponding image match cost contribution.

In some embodiments, the cost of some of the candidate depth values may not include an image match cost contribution. For example, for a predetermined fixed depth offset which is not associated with a depth map or image, a fixed cost value may for example be assigned.

The cost function may typically be determined such that it is indicative of a likelihood that the depth value reflects the accurate or correct depth value for the current pixel.

It will be appreciated that the determination of a merit value based on a merit function, and/or the selection of a candidate depth value based on merit values, is inherently also a determination of a cost value based on a cost function, and/or the selection of a candidate depth value based on cost values. A merit value can be translated into a cost function simply by applying a function to the merit value where the function is any monotonically decreasing function. A higher merit value corresponds to a lower cost value and e.g. the selection of a candidate depth value with the highest merit value is directly the same as selecting the cost value with the lowest value.

The depth determiner 105 may then select a depth value from the set of candidate depth values in response to the cost values for the set of candidate depth values. The selected candidate depth value will henceforth be referred to as the selected depth value.

In many embodiments, the selection may be a selection of the candidate depth value for which the lowest cost values was determined. In some embodiments, a more complex criterion may be evaluated also considering other parameters (equivalently such considerations may typically be considered part of a (modified) cost function).

Thus, for the current pixel, the approach may select the candidate depth value which is considered to be the most likely to reflect the correct depth value for the current pixel as determined by the cost function.

An updated depth value is then determined for the current pixel based on the selected depth value. The exact update will depend on the specific requirements and preferences of the individual embodiment. For example, in many embodiments, the previous depth value for the first pixel may simply be replaced by the selected depth value. In other embodiments, the update may consider the initial depth value, for example the updated depth value may be determined as a weighted combination of the initial depth value and the selected depth value with e.g. the weights being dependent on the absolute cost value for the selected depth value.

Thus, an updated or modified depth value is determined for the current pixel. The process may be iterated over some or indeed all of the pixels in the depth map. It will be appreciated that whereas the above description focusses on the application to a single pixel, a block process may be applied where for example the determined updated depth value is applied to all depth values within a block comprising the first pixel.

The specific selection of candidate depth values may depend on the desired operation and performance for the specific application. Typically, the set of candidate depth values will include a number of pixels in a neighborhood of the current pixel. A kernel, area, or template may overlay the current pixel and the pixels within the kernel/ area/ template may be included in the candidate set. In addition, the same pixel in a different temporal frame (typically immediately before or after the current frame for which the depth map is provided) is included as well as potentially a kernel of neighborhood pixels which however is typically substantially smaller than the kernel in the current depth map. Typically, at least two offset depth values (corresponding to an increased and decreased depth, respectively) are further included.

However, in order to reduce computational complexity and resource demand, the number of depth values included in the candidate set is typically substantially limited. In particular, as all candidate depth values are evaluated for each new pixel, and typically for all pixels of the depth map for each iteration, each additional candidate value results in a large number of additional processing steps.

In many typical applications, it is often preferred to have no more than around 5-20 candidate depth values in the set of candidate depth values for each pixel. In many practical scenarios it is necessary to restrict the number of candidate depth values to around 10 candidates in order to achieve real time processing for video sequences. However, the relatively low number of candidate depth values makes the determination! selection of which candidate depth values to include in the set highly critical.

A cost function for one pixel being smaller or lower than for another pixel means that the resulting cost value determined by the cost function is smaller/ lower for all other parameters being the same, i.e. for all parameters other than the position being for the two pixels being the same. Similarly, a cost function for one pixel being larger or higher than for another pixel means that the resulting cost value determined by the cost function is larger/ higher for all other parameters being considered for the two pixels being the same. Also, a cost function for one pixel exceeding another pixel means that the resulting cost value determined by the cost function exceeds the other for all other parameters being considered for the two pixels being the same.

For example, the cost function typically considers a number of different parameters, e.g. a cost value may be determined as $C=f(d,a,b,c,...)$ where d refers to the position of the pixel relative to the current pixel (such as the distance) and a,b,c... reflect other parameters that are taken into account, such as the image signal values of the associated images, the value of other depth values, a smoothness parameter etc.

The cost function $f(d,a,b,c,...)$ for pixel A is lower than for pixel B if $C=f(d,a,b,c,...)$ is lower for pixel A than for pixel B if parameters a,b,c,... are the same for the two pixels (and similarly for the other terms).

The exact cost function will depend on the specific embodiment. In many embodiments, the cost function comprises a cost contribution which is dependent on a difference between image values of multi-view images for pixels that are offset by a disparity matching the depth value. As previously described, the depth map may be a map for an image (or set of images) of a multi-view image set capturing a scene from different viewpoints. There will accordingly be a disparity between the positions of the same object between different images and the disparity is dependent on the depth of the object. Accordingly, for a given depth value, the disparity between two or more images of a multi-view image can be calculated. Accordingly, in some embodiments, for a given candidate depth value, the disparity to other images can be determined and accordingly the position in the other images of the first pixel position under the assumption that the depth value is correct can be determined. The image values, such as the color or brightness values, for one or more pixels in the respective positions can be compared and a suitable difference measure can be determined. If the depth value is indeed correct, it is more likely that the image values are the same, and that the difference measure is small, than if the depth value is not the correct depth. Accordingly, the cost function may include a consideration of the difference between the image values, and specifically the cost function may reflect an increasing cost for an increasing difference measure.

The depth determiner 105 may specifically be arranged to add depth value candidates that are determined from the 2D structural frame. For example, for the structural frame representing a human skeleton, the depth determiner 105 may add one or more depth candidate values that depend on the skeleton part depth (e.g. arm/leg). In particular, it may add one or more depth values which are directly depth values determined for the structural frame, including e.g., a depth value of a point or interconnect of the 2D structural frame. For example, skeleton lines (such as for example the upper arm) will intersect the pixel grid and hence provide all intersected pixels and their neighbor pixels with a candidate value. In many cases, the candidate depth values may also include depth values that are close to the 2D structural frame.

The depth determiner 105 may then for such candidate depth values determine the cost function for these structural frame candidate depth values to include a cost contribution dependent on the difference of the candidate depth value and the depth value of the 2D structural frame..

For example, a pixel that lies spatially (in projective image space) very close to the skeleton arm of a person likely has the same or very similar depth as nearest point on the line corresponding with the skeleton arm. More specific, during candidate based multi view depth estimation, the depth determiner 105 may evaluate the following cost term for a given pixel:

$$C_{\text{total}} = w_1 C_{\text{match}} + w_2 C_{\text{smoothness}} + w_3 C_{\text{frame}}$$

where $C_{\text{match}}$ is a cost that depends on the match error of the current view with one or more other views and $C_{\text{smoothness}}$ weights both spatial smoothness and penalizes depth transitions within regions with constant color intensity. Cost functions $C_{\text{match}}$ and $C_{\text{smoothness}}$ are well known to the skilled person and will therefore not be described further herein.

The cost component $C_{\text{frame}}$ indicates the deviation of the depth from what that which a close 2D structural frame may predict. An example of a suitable version may be:

$$C_{\text{frame}} \equiv \begin{cases} |D_{\text{candidate}} - D_{\text{skeframeleton}}| & \text{if} \quad |\mathbf{x} - \mathbf{x}_{\text{frame}}| \leq w \\ \text{maximum cost} & \text{otherwise} \end{cases}$$

where $D_{\text{frame}}$ is the (coded) depth value on the closest 2D structural frame part to the pixel and $|\mathbf{x} - \mathbf{x}_{\text{frame}}|$ is the Euclidian distance between the pixel being estimated and a part on the 2D structural frame. It should be noted that for the distance exceeding a given pixel distance w, the cost will be set to a maximum cost such that it is ensured that the structural frame depth value is not selected for pixels that are too far away, e.g. it can prevent that a human body depth is selected when it is further away than e.g., an arm or leg width.

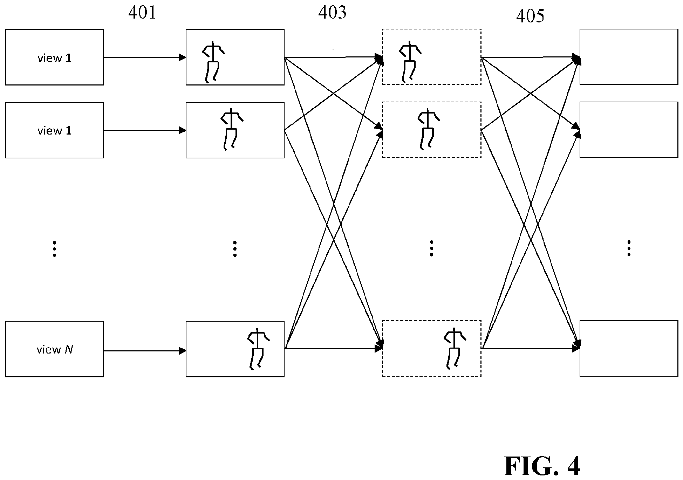

FIG. 4 illustrates an approach where the source view images are first passed through a frame detection phase 401. In the next step 403, multi-view frame depth estimation is performed to assign a depth value to each vertex in the frame after which depth values can be interpolated on the line interconnections e.g. corresponding to skeleton parts of a human. In the following step 405, dense depth estimation then takes, among other factors, the proximity and estimated frame/skeleton depth into account in a multi-view candidate depth generation and matching process evaluating a cost function that also depends on the 2D structural frame information.

A significant advantage of such approaches is that there is in principle no training phase needed as part of the depth estimation.

In some embodiments, the depth determiner 105 may be arranged to determine depth values based on visual features from the image in combination with the 2D structural frame, and a mask which reflects an outline of the object.

In addition to the depth determiner 105 being arranged to generate the structural frame (e.g. using an artificial neural network as previously described), the depth determiner 105 may in some embodiments comprise a visual feature extractor which is arranged to extract visual features from the image.

Such features may in particular include e.g. vectors at each pixel describing the appearance of local areas such as edge directions, color distributions, brightness distributions, etc.

The visual features may be extracted by e.g. some form of artificial neural network. Currently a number of artificial neural networks have been developed which can perform such operation and visual feature extraction, such as e.g. the developed Unet, HRNet, Mask-RCNN neural networks. In some embodiments, a visual feature extraction may be based on specifically designed (hand crafted). Such feature extractors could include extractors such as SIFT (Scale-Invariant Feature Transform), SURF (Speeded Up Robust Features), ORB (Oriented FAST and Rotated BRIEF), etc. feature extractors.

As a very specific example, such features may in particular be generated as e.g. the output of the $N = 10, 20, .., 50$ layers of an object detection neural network, such as a Mask-RCNN. The first $N$ layers of a convolutional neural network when applied to an image typically results in a tensor of shape/size (C, H, W) where C is typically > 8 channels which represent the features, and H and W are typically smaller than the original image height and width respectively. Hence, the features typically model different aspects of a spatial region.

Such visual features may in many scenarios characterize the image and provide relevant information that allows depth to be estimated.

In many embodiments, the determination of the object mask may be based on using a trained artificial neural network. This artificial neural network may be arranged to receive the first image as an input and to generate the object mask as an output.

The artificial neural network may for example be trained using a variety of different images in which an image area corresponding to a person (or other specific object) has manually been identified. The output of the artificial neural network for a given set of images may then be compared to the manually generated masks to provide a cost value that is used to update the artificial neural network. In some embodiments, virtual images may be generated based on a 3D model of a scene and a mask may be determined to correspond to the image segments that reflect a person in the virtual image. Again, using such images as an input may result in an output mask that can be compared to the mask determined directly from the model to provide a cost value for adaptation/ training.

In other embodiments, non-artificial neural network approaches may be used in which e.g. image segmentation is performed and the mask may then be generated by combining segments that meet a given criterion for being likely to represent a person. As another example, known techniques such as region growing or feature clustering, etc. may be used to generate the mask of (e.g.) a person.

The depth determiner 105 may be arranged to generate depth data from the mask, the visual features, and the structural frame, and it may specifically comprise a trained artificial neural network which may receive the visual features, the structural frame, and the mask as input data and which may provide depth values for at least part of the image as an output, such as specifically for the part of the image that are within the object mask.

Such an artificial neural network may be trained using images for which depth values have been e.g., manually determined or determined by other means. Such training images may be analyzed using the same feature extraction, structural frame determination, and mask determination as used in the depth determiner 105 during normal operation. The resulting mask, structural frame, and visual features may be applied as inputs to the artificial neural network and the generated output may be compared to the manually or otherwise determined depth values. As a specific example of training data, synthetic/ virtual scenes may be synthesized using a suitable model. Images may then be generated to represent the virtual world and the corresponding depth values may be determined. These images may then be subjected to the feature extraction, structural frame determination, mask determination and depth determination by the artificial neural network with the results being compared to the depth values and the artificial neural network being adapted in response.

Such a trained artificial neural network may in many scenarios provide very good depth estimates, and often this can be achieved by considering no other information than the visual features and the mask in combination with the 2D structural frame. In particular for objects such as humans and animals where the 2D structural frame represents the skeleton, and given sufficient training data, the depth estimates may often be accurate even if no other information is considered. Given sufficient training data, the approach may provide accurate depth information without requiring multiple images representing the scene from different directions or any dedicated measurement of depth.. However, view consistent depth for multiple images may still be used for the use case where a new view needs to be synthesized from the multiple reference views.

In some embodiments, the depth determination may thus be based on visual features/properties of an image. The approach may extract the 2D structural frame (e.g. representing a human pose) and mask from a single e.g. RGB image and combine this information with extracted visual feature to produce a depth map of the object (e.g. of the human body).

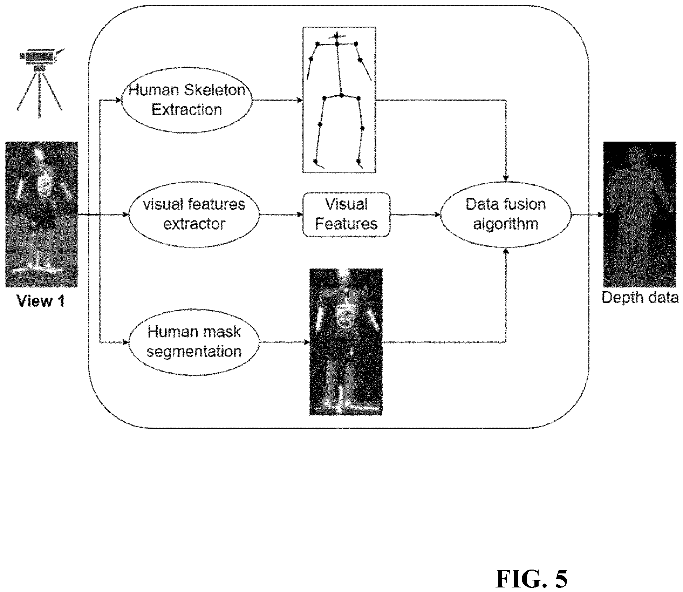

FIG. 5 illustrates an example of elements of a depth determination in line with this approach. In the example the object is specifically a human body and the structural frame is a human skeleton structure/ model.

In the example, a single image for a single view is analyzed and depth data is determined based on this single image. In the approach, the image is subjected to a structural frame determination which in the specific example is an extraction of a human skeleton model, and which may specifically be performed by an artificial neural network as previously described. The same image is also subjected to a visual features extraction which generates the visual features as mentioned above. Further, the image is also subjected to a human mask segmentation which extracts/ determines a mask for the human body detected in the image.

The resulting structural frame, visual features, and mask are then fed to a data fusion algorithm which generates the depth data. Specifically, the information may be fed to an artificial neural network which proceeds to then generate e.g. a depth map for the image.

The approach has been found to provide a highly efficient and advantageous depth determination in many scenarios. It may in many embodiments advantageous use a number of artificial neural networks and provide the particular advantage that different (smaller) artificial neural networks may be focused on different aspects and then be combined to provide a more (computationally) efficient and/or more accurate depth determination.

In some embodiments, the depth determiner 105 is arranged to receive an initial set of depth values for the image, and it may then determine the depth map by adapting the initial set of depth values in dependence on the two dimensional frame structure. The depth determiner 105 may receive initial depth values, such as an initial depth map, and then proceed to refine/modify these depth values based on the 2D structural frame determined for the image. The depth determiner 105 may specifically impose a constraint on the depth values of the depth map.

Specifically, in many embodiments, the depth determiner 105 may be arranged to bias the depth values towards depth values determined for the 2D structural frame where the bias increases with a reduced distance from the depth pixel to the 2D structural frame.

In many embodiments, the receiver 101 may be arranged to receive a plurality of images representing the scene from different viewpoints. The apparatus of FIG. 1 may include a disparity estimator 107 which is arranged to receive the plurality of images and to perform a disparity based depth estimation from the images from different viewpoints. Such disparity estimation may be based on detecting corresponding or matching image sections in different images and then determine the corresponding depth from the disparity/position offsets of image sections in the different images and the difference in viewpoint between these as is known in the art.

Thus, in some embodiments, an initial depth map may be generated from e.g. a set of images using disparity estimation. Such a depth map may provide a suitable depth estimation and a useful depth map. However, in the example of FIG. 1, the depth map is further improved by an adaptation of the depth based on the information of the 2D structural frame. This additional information may provide improved depth values that are more consistent and accurate, and in particular may provide an improved depth value determination for e.g. a human or animal in the scene/image.

In particular, the depth determiner 105 may modify depth values that are close to the 2D structural frame such that these are more in line with the 2D structural frame. The 2D structural frame introduces a constraint on the object, e.g. for a human skeleton structural frame representing a given pose of a human, the positions/depth of the different parts of the human body, such as arms, legs, head, torso, etc. will be constrained, and in particular the positions/depths for different points/pixels of the human body will be constrained relative to each other. For example, the depth variations along a direction corresponding to e.g. the interconnect between a point corresponding to the wrist and a point corresponding to the elbow, will be very limited and e.g. correspond to a linear transition. The depth determiner 105 may accordingly adapt the depth values of the depth map along the corresponding line in the image as represented by the 2D structural frame. As a low complexity example, a spatial low pass filter may be applied along the part of the image from the wrist point to the elbow point.

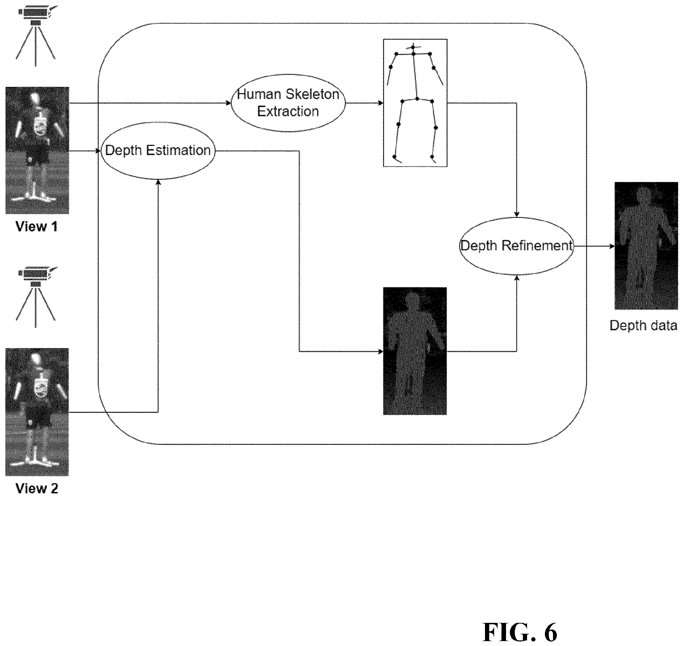

FIG. 6 illustrates an example of elements of a depth determination in line with this approach. In the example the object is specifically a human body and the structural frame is a human skeleton structure.

In the example, two images are received which capture a scene including a human from different angles, i.e. two view images for different viewpoints are received. Based on the two images, a depth estimation is performed and specifically a disparity match based depth estimation is performed to result in a depth map.

In the approach, one of the images is subjected to a structural frame determination which in the specific example is an extraction of a human skeleton model and which may specifically be performed by an artificial neural network as previously described. Typically, the structural frame may be determined for one view image which is for the same viewpoint that the depth maps are also determined.

The structural frame/ human skeleton model is then used to process and update depth values of the initial depth map to generate the output depth map. This depth refinement may be different in different embodiments, and as described above/below a number of different approaches may be used. Typically, the depth values of the depth map may be modified to constrain the depth values to match that of the structural frame, and specifically may bias the depth values towards depth values determined for the 2D structural frame.

In many embodiments, the depth determiner 105 may be arranged to bias depth values proximal to the 2D structural frame towards depth values for the 2D structural frame.

For example, the depth pixels that coincide with the 2D structural frame may first be identified and depth values for these pixels may first be determined based on the initial values. For example, the depth transition between two interconnected points of the 2D structural frame may be considered to be a linear depth transition. Accordingly, a fit of a linear depth transition to the depth values along the interconnect may be applied, or e.g. the depth values of the points of the interconnect may be considered correct and the depth values of the intervening depth values along the interconnect may be modified/set to provide a gradual linear transition from the depth of one end point to the other end point.

The depth determiner 105 may then proceed to align depth values around the pixels coinciding with the 2D structural frame with the determined depth values of the aligned pixels. As a specific example a low pass spatial filter may be applied. Such a low pass filter may e.g. have a kernel that is asymmetric with respect to the depth pixel for which the depth value is determined, and with the asymmetry being such that depth pixels towards, and typically including the 2D structural frame have higher weights than pixels at higher distance to the 2D structural frame.

In many embodiments, the depth determiner 105 may be arranged to reduce the difference between a depth value of the depth map and a depth value of the 2D structural frame where the reduction depends on the distance between the pixel of the depth value and the 2D structural frame. Thus, the closer the pixel is to the 2D structural frame the stronger the reduction, and thus the more the depth value is aligned with the depth value of the 2D structural frame. This approach may for example be applied to each pixel within a given distance of the 2D structural frame resulting in a more accurate depth map.

For example, for a situation where the 2D structural frame represents a human skeleton, the approach may result in the depth values for pixels likely to reflect the body of the corresponding human being closer aligned with the depth values of the underlying skeleton and the current human pose. The information provided by the 2D structural frame on the human pose and body for a human in the image is used to constrain/adapt the depth values to be more accurate.

In some embodiments, a convolution neural network may be trained that takes as input the depth mapped out by the skeleton (the structural frame) and a mask that maps out which pixels are intersected by the skeleton and also the initial depth map. Given ground truth depth maps, the coefficients of a convolutional depth refinement neural network are fitted.

In some embodiments, the 2D structural frame, e.g. being a human skeleton frame indicating a human pose, may be used as supplementary information for depth map adaptation/ improvement. The initial raw depth data can be produced in different ways including e.g. by multi view matching and disparity estimation. The 2D structural frame determined from one (or more) of the views can be used as supportive information to postprocess the initial depth map in order to refine the raw initial depth data.

The approach may for example reduce noise, artefacts, and inaccuracies of the depth map/estimation. This improvement may in particular provide a more accurate and consistent depth map for the part corresponding to the object (e.g. the human body). This is particularly advantageous as errors and noise in such parts are likely to be have an increased effect on the perceived image quality of any image generated based on the depth map. E.g. a viewer is likely to notice distortions or noise/inaccuracies in the rendering of a human body.

The apparatus(s) may specifically be implemented in one or more suitably programmed processors. For example, the artificial neural networks may be implemented in one or more such suitably programmed processors. The different functional blocks, and in particular the artificial neural network, may be implemented in separate processors and/or may e.g. be implemented in the same processor. An example of a suitable processor is provided in the following.

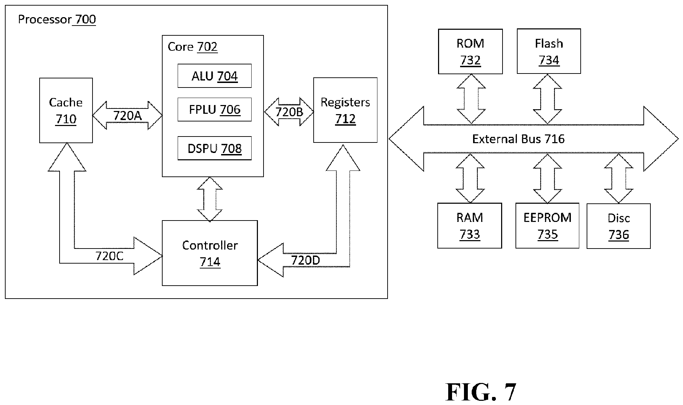

FIG. 7 is a block diagram illustrating an example processor 700 according to embodiments of the disclosure. Processor 700 may be used to implement one or more processors implementing an apparatus as previously described or elements thereof (including in particular one more artificial neural network). Processor 700 may be any suitable processor type including, but not limited to, a microprocessor, a microcontroller, a Digital Signal Processor (DSP), a Field ProGrammable Array (FPGA) where the FPGA has been programmed to form a processor, a Graphical Processing Unit (GPU), an Application Specific Integrated Circuit (ASIC) where the ASIC has been designed to form a processor, or a combination thereof.

The processor 700 may include one or more cores 702. The core 702 may include one or more Arithmetic Logic Units (ALU) 704. In some embodiments, the core 702 may include a Floating Point Logic Unit (FPLU) 706 and/or a Digital Signal Processing Unit (DSPU) 708 in addition to or instead of the ALU 704.

The processor 700 may include one or more registers 712 communicatively coupled to the core 702. The registers 712 may be implemented using dedicated logic gate circuits (e.g., flip-flops) and/or any memory technology. In some embodiments the registers 712 may be implemented using static memory. The register may provide data, instructions and addresses to the core 702.

In some embodiments, processor 700 may include one or more levels of cache memory 710 communicatively coupled to the core 702. The cache memory 710 may provide computer-readable instructions to the core 702 for execution. The cache memory 710 may provide data for processing by the core 702. In some embodiments, the computer-readable instructions may have been provided to the cache memory 710 by a local memory, for example, local memory attached to the external bus 716. The cache memory 710 may be implemented with any suitable cache memory type, for example, Metal-Oxide Semiconductor (MOS) memory such as Static Random Access Memory (SRAM), Dynamic Random Access Memory (DRAM), and/or any other suitable memory technology.

The processor 700 may include a controller 714, which may control input to the processor 700 from other processors and/or components included in a system and/or outputs from the processor 700 to other processors and/or components included in the system. Controller 714 may control the data paths in the ALU 704, FPLU 706 and/or DSPU 708. Controller 714 may be implemented as one or more state machines, data paths and/or dedicated control logic. The gates of controller 714 may be implemented as standalone gates, FPGA, ASIC or any other suitable technology.

The registers 712 and the cache 710 may communicate with controller 714 and core 702 via internal connections 720A, 720B, 720C and 720D. Internal connections may be implemented as a bus, multiplexer, crossbar switch, and/or any other suitable connection technology.

Inputs and outputs for the processor 700 may be provided via a bus 716, which may include one or more conductive lines. The bus 716 may be communicatively coupled to one or more components of processor 700, for example the controller 714, cache 710, and/or register 712. The bus 716 may be coupled to one or more components of the system.

The bus 716 may be coupled to one or more external memories. The external memories may include Read Only Memory (ROM) 732. ROM 732 may be a masked ROM, Electronically Programmable Read Only Memory (EPROM) or any other suitable technology. The external memory may include Random Access Memory (RAM) 733. RAM 733 may be a static RAM, battery backed up static RAM, Dynamic RAM (DRAM) or any other suitable technology. The external memory may include Electrically Erasable Programmable Read Only Memory (EEPROM) 735. The external memory may include Flash memory 734. The External memory may include a magnetic storage device such as disc 736. In some embodiments, the external memories may be included in a system.

The invention can be implemented in any suitable form including hardware, software, firmware or any combination of these. The invention may optionally be implemented at least partly as computer software running on one or more data processors and/or digital signal processors. The elements and components of an embodiment of the invention may be physically, functionally and logically implemented in any suitable way. Indeed the functionality may be implemented in a single unit, in a plurality of units or as part of other functional units. As such, the invention may be implemented in a single unit or may be physically and functionally distributed between different units, circuits and processors.

Although the present invention has been described in connection with some embodiments, it is not intended to be limited to the specific form set forth herein. Rather, the scope of the present invention is limited only by the accompanying claims. Additionally, although a feature may appear to be described in connection with particular embodiments, one skilled in the art would recognize that various features of the described embodiments may be combined in accordance with the invention. Throughout the application the terms "2D" and "3D" are equivalent to respectively "two dimensional" and "three dimensional". In the claims, the term comprising does not exclude the presence of other elements or steps.

Furthermore, although individually listed, a plurality of means, elements, circuits or method steps may be implemented by e.g. a single circuit, unit or processor. Additionally, although individual features may be included in different claims, these may possibly be advantageously combined, and the inclusion in different claims does not imply that a combination of features is not feasible and/or advantageous. Also the inclusion of a feature in one category of claims does not imply a limitation to this category but rather indicates that the feature is equally applicable to other claim categories as appropriate. Furthermore, the order of features in the claims do not imply any specific order in which the features must be worked and in particular the order of individual steps in a method claim does not imply that the steps must be performed in this order. Rather, the steps may be performed in any suitable order. In addition, singular references do not exclude a plurality. Thus references to "a", "an", "first", "second" etc do not preclude a plurality. Reference signs in the claims are provided merely as a clarifying example shall not be construed as limiting the scope of the claims in any way.

**Claims**

1. An apparatus for generating a depth map for a first image of a scene, the apparatus comprises:

   a receiver (101) arranged to receive at least the first image;
   a structural frame determiner (103) arranged to process the first image to determine a two dimensional structural frame for an object in the first image, the two dimensional structural frame being defined by a set of points and interconnections between the points, the two dimensional structural frame representing a projection to an image space of the image of a three dimensional structural frame of the object in the scene;
   a depth determiner (105) arranged to generate the depth map in dependence on the two dimensional structural frame.

2. The apparatus of claim 1 wherein the structural frame determiner (103) comprises a trained artificial neural network arranged to receive the first image as an input and to generate points of the two dimensional structural frame as an output.

3. The apparatus of any previous claim wherein the receiver (101) is arranged to receive a plurality of images, the structural frame determiner (103) is arranged to generate a two dimensional structural frame for at least some images of the plurality of images, and the depth determiner (105) is arranged to determine depth values for the depth map in dependence on a disparity between points of two-dimensional frame structures for the at least some images.

4. The apparatus of claim 3 wherein the depth determiner (105) is arranged to determine an estimated three dimensional frame structure for the object in dependence on disparities between points of the two-dimensional frame structures for the at least some images, and to determine depth values for points of the two dimensional structural frames for the at least some of the images by a projection of points of the estimated three dimensional frame structure to image spaces of the at least some images.

5. The apparatus of claim 3 or 4 wherein the depth determiner (105) is arranged to generate depth values for an interconnection between a first and a second point of the two-dimensional frame structure from depth values of the first point and the second point.

6. The apparatus of any previous claim wherein the depth determiner (105) is arranged to determine an initial depth map, and to generate the depth map by for at least a first pixel of the depth map performing the steps of:

   determining a set of candidate depth values, the set of candidate depth values comprising depth values for other pixels of the depth map than the first pixel and at least a first candidate depth value determined from the two dimensional structural frame ;
   determining a cost value for each of the candidate depth values in the set of candidate depth values in response to a cost function;
   selecting a first depth value from the set of candidate depth values in response to the cost values for the set of candidate depth values;
   determining an updated depth value for the first pixel in response to the first depth value; wherein the cost value for the first candidate depth value is dependent on a difference between the candidate depth value and a depth value of the two dimensional structural frame.

7. The apparatus in claim 6 wherein the cost value for the first candidate depth value is dependent on a distance between a position of the candidate depth value and a position of the depth value of the two dimensional structural frame.

8. The apparatus of any previous claim wherein the depth determiner (105) is arranged to extract visual features from the first image and to determine an image mask for the object in the first image, and wherein the depth determiner (105) is further arranged to determine depth estimates for the depth map in dependence on the visual features, the mask, and the two dimensional structural frame.

9. The apparatus of claim 8 wherein the depth determiner (105) comprises a trained artificial neural network arranged to receive the visual features, the mask, and the two dimensional structural frame as inputs and to determine the depth map as an output.

10. The apparatus of claim 8 or 9 wherein the depth determiner comprises a trained artificial neural network arranged to receive the first image as an input and to generate the mask as an output.

11. The apparatus of any previous claim wherein the depth determiner (105) is arranged to receive a first set of depth values for the image and to determine the depth map by adapting the first set of depth values in dependence on the two dimensional frame structure.

12. The apparatus of claim 11 wherein the at least first image comprises a plurality of images representing the scene from different viewpoints, and the apparatus comprises a disparity estimator (107) arranged to determine the first set of depth values by disparity estimation between the plurality of images.

13. The apparatus of claim 11 or 12 wherein the depth determiner (105) is arranged to determine a depth value for a first pixel of the depth map by reducing a difference between a depth value of the first set of depth values for the first depth pixel and a depth value of the two dimensional frame structure, the reduction being dependent on a distance between the first depth pixel and the two dimensional depth structure.

14. A method of determining a depth map for a first image of a scene, the method comprises:

receiving at least the first image;
processing the first image to determine a two dimensional structural frame for an object in the first image, the two dimensional structural frame being defined by a set of points and interconnections between the points, the two dimensional structural frame representing a projection to an image space of the image of a three dimensional structural frame of the object in the scene; and
generating the depth map in dependence on the two dimensional structural frame.

15. A computer program product comprising computer program code means adapted to perform all the steps of claim 1 when said program is run on a computer.

FIG. 1

FIG. 2

$$l = \max\left(0, \sum_n w_n x_n\right)$$

**FIG. 3**

FIG. 4

View 1

Human Skeleton Extraction

visual features extractor

Visual Features

Human mask segmentation

Data fusion algorithm

Depth data

**FIG. 5**

View 1

View 2

Human Skeleton
Extraction

Depth Estimation

Depth Refinement

Depth data

**FIG. 6**

**FIG. 7**

Europäisches
Patentamt

European
Patent Office

Office européen
des brevets

# EUROPEAN SEARCH REPORT

Application Number

**EP 23 20 4253**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Rodriguez-Criado Daniel ET AL: "Multi-person 3D pose estimation from unlabelled data", arXiv (Cornell University)., 16 December 2022 (2022-12-16), pages 1-10, XP093146772, Ithaca DOI: 10.48550/arxiv.2212.08731 Retrieved from the Internet: URL:https://www.researchgate.net/profile/P ilar-Bachiller/publication/366423242_Multi -person_3D_pose_estimation_from_unlabelled _data/links/63a2cd6f41663a23c075361c/Multi -person-3D-pose-estimation-from-unlabelled -data.pdf [retrieved on 2024-03-28] | 1-5,14, 15 | INV. G06T7/55 |
| Y | * page 5, left-hand column * * figures 3, 1 * * "IV. Experimental Results" section; page 5, right-hand column, paragraph 2 * * abstract * * "III. Method" section; page 3, right-hand column * * "A. System calibration and skeleton detection" section; page 4 * * "B. Skeleton matching" section; page 4, left-hand column - right-hand column * | 8-11 | |

-----

-/--

TECHNICAL FIELDS SEARCHED (IPC)

G06T

The present search report has been drawn up for all claims

| Place of search | Date of completion of the search | Examiner |
|---|---|---|
| Munich | 28 March 2024 | Rodes Arnau, Isabel |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.........................................................................................................
& : member of the same patent family, corresponding
   document

EPO FORM 1503 03.82 (P04C01)

**page 1 of 2**

26

Europäisches
Patentamt

European
Patent Office

Office européen
des brevets

# EUROPEAN SEARCH REPORT

Application Number

EP 23 20 4253

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | TANG SICONG ET AL: "A Neural Network for Detailed Human Depth Estimation From a Single Image", 2019 IEEE/CVF INTERNATIONAL CONFERENCE ON COMPUTER VISION (ICCV), IEEE, 27 October 2019 (2019-10-27), pages 7749-7758, XP033723103, DOI: 10.1109/ICCV.2019.00784 [retrieved on 2020-02-24] * abstract; figure 1 * * "3. Overview" section; page 3 - page 4 * ----- | 8-11 | |
| A | VAROL GÜL ET AL: "BodyNet: Volumetric Inference of 3D Human Body Shapes", 6 October 2018 (2018-10-06), SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 20 - 38, XP047488251, ISBN: 978-3-540-74549-5 [retrieved on 2018-10-06] * the whole document * ----- | 1-15 | **TECHNICAL FIELDS SEARCHED (IPC)** |

The present search report has been drawn up for all claims

| Place of search | Date of completion of the search | Examiner |
|---|---|---|
| Munich | 28 March 2024 | Rodes Arnau, Isabel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 4013049 A1

**Non-patent literature cited in the description**

- **XAVIER GLOROT ; ANTOINE BORDES ; YOSHUA BENGIO**. *Proceedings of the Fourteenth International Conference on Artificial Intelligence and Statistics, PMLR*, 2011, vol. 15, 315-323
- **OORD ; AARON VAN DEN ; SANDER DIELEMAN ; HEIGA ZEN ; KAREN SIMONYAN ; ORIOL VINYALS ; ALEX GRAVES ; NAL KALCHBRENNER ; ANDREW SENIOR ; KORAY KAVUKCUOGLU**. Wavenet: A generative model for raw audio.. *arXiv: 1609.03499*, 2016
- **HOCHREITER, SEPP ; JÜRGEN SCHMIDHUBER**. Long short-term memory. *Neural computation*, 1997, vol. 9 (8), 1735-1780
- **HE, K. ; GKIOXARI, G. ; DOLLÁR, P. ; GIRSHICK, R.** Mask R-CNN. *arXiv. 1703.06870*, 2017